# EUROPÄISCHE PATENTANMELDUNG

(11) **EP 1 199 542 A2**
(43) Veröffentlichungstag der Anmeldung: **24.04.2002**
(21) Anmeldenummer: 01124014.0
(22) Anmeldetag: 09.10.2001
(51) Int. Cl.: G01B 11/24

(54) **Verfahren und Vorrichtung zur optischen Vermessung eines Oberflächenprofils eines Objektes**

(30) Priorität: 13.10.2000 DE 10050963; 06.10.2001 DE 10149357
(71) Anmelder: Leica Microsystems Imaging Solutions Ltd., Cambridge, CB1 3QH (GB)
(72) Erfinder: Sieckmann, Frank, 44879 Bochum (DE)
(74) Vertreter: Reichert, Werner F., Dr.

(57) **Zusammenfassung**

Der Erfindung liegt ein Verfahren und eine Vorrichtung zur optischen Vermessung eines Oberflächenprofils eines Objektes (1) zugrunde, wobei mit einer Bildaufnahmevorrichtung (3) eine Serie von n Bildern des Objektes (1) in verschiedenen Ebenen (2) in z-Richtung eines Koordinatensystems (x, y, z) aufgenommen werden. Es werden die Bildinhalte aller n Bilder des erzeugten Bildstapels an jedem Koordinatenpunkt (x, y) in z-Richtung miteinander verglichen, um daraus nach vorbestimmten Kriterien eine Ebene (2) zu bestimmen und deren Ebenen-Nummer (N) diesem Koordinatenpunkt (x, y) zuzuordnen und in einem Maskenbild (5) abzuspeichern. Das Maskenbild (5) enthält alle 3D-Informationen der Objektoberfläche. Es kann mit 2D-Bildverarbeitungsprozessen bearbeitet werden. Aus dem Maskenbild (5) ist die 3D-Information schnell und einfach abrufbar. Das Oberflächenprofil kann rekonstruiert und dreidimensional dargestellt werden.

## Beschreibung

Die Erfindung betrifft ein Verfahren und eine Vorrichtung zur optischen Vermessung eines Oberflächenprofils eines Objektes.

Es sind mehrere Verfahren zur dreidimensionalen Rekonstruktion von Oberflächen mikroskopischer Strukturen bekannt. Bei der CLSM (Confocal Laser Scanning Microscopy) wird mit einem Laser punktweise das Objekt in einer Ebene gerastert und dadurch ein Bild mit sehr geringer Tiefenschärfe aufgenommen. Durch eine Vielzahl von Aufnahmen in verschiedenen Ebenen und durch eine entsprechende Bildverarbeitung kann das Objekt dreidimensional dargestellt werden. Die Daten werden bei der CLSM nur auf sehr teurem Wege erzeugt und es werden optische Komponenten hoher Güte vorausgesetzt. Auch bei einer anderen Technik, bei der mittels einer auf die zu rekonstruierende Oberfläche gelenkten feinen Lichtlinie eine 3D Rekonstruktion erreicht wird, ist ebenfalls ein erhöhter technischer Aufwand erforderlich.

Die derzeitigen Verfahren sind teuer und erfordern neben einem guten technischen Verständnis auch sehr viel Justierarbeit. Ferner sind die Verfahren nur für kleine Flächen anwendbar.

Es ist die Aufgabe der Erfindung, das Oberflächenprofil eines Objekts ohne Berührung und ohne Zerstörung des Objektes schnell und kostengünstig zu vermessen.

Die Aufgabe wird durch ein Verfahren gelöst, das das Oberflächenprofil des Objektes in einem dreidimensionalen Koordinatensystem (x, y, z) optisch vermisst und folgende Schritte enthält:
- Aufnehmen einer Serie von n Bildern des Objektes in verschiedenen Ebenen in z-Richtung mittels einer Bildaufnahmevorrichtung, wobei jede Ebene eine Vielzahl von Koordinatenpunkten (x, y) enthält,
- Zuordnen jedes der Bilder zu einer Ebene mit definierter Ebenennummer im Objekt,
- Beziehen einer jeden Ebene auf einen gemeinsamen Ursprung (x₀,y₀) im Koordinatensystem (x, y, z) und
- Erzeugen eines Maskenbildes durch die folgenden Prozedur für jeden Koordinatenpunkt (x, y);
- Vergleichen der Bildinhalte aller n Bilder an diesem Koordinatenpunkt (x, y) miteinander, um daraus nach vorbestimmten Kriterien eine Ebene zu bestimmen und deren Ebenennummer diesem Koordinatenpunkt (x, y) zuzuordnen und im Maskenbild abzuspeichern.

Weiterhin wird die Aufgabe durch eine Vorrichtung gelöst, die das Oberflächenprofil des Objektes optisch vermisst und folgende Merkmale enthält:
- eine Bildaufnahmevorrichtung zur Aufnahme einer Serie von n Bildern des Objektes in verschiedenen Ebenen in z-Richtung eines Koordinatensystems (x, y, z), wobei jedes der Bilder einer Ebene mit definierter Ebenennummer im Objekt zugeordnet ist und jede Ebene auf einen gemeinsamen Ursprung (x₀,y₀) bezogen ist und jede Ebene eine Vielzahl von Koordinatenpunkten (x, y) enthält, und
- einen Rechner, der für jeden Koordinatenpunkt (x, y) die Bildinhalte aller n Bilder an diesem Koordinatenpunkt (x, y) miteinander vergleicht, um daraus nach vorbestimmten Kriterien eine Ebene zu bestimmen und deren Ebenennummer diesem Koordinatenpunkt (x, y) zuzuordnen und als ein Maskenbild abzuspeichern.

Mit Hilfe der Erfindung können ohne großen technischen Aufwand Oberflächenprofile von Objekten ermittelt werden. Die Bildaufnahmevorrichtung kann dabei nur aus einer Kamera bestehen. Bei Bildaufnahmen von kleineren oder mikroskopischen Objekten wird als Bildaufnahmevorrichtung ein Makroskop oder Mikroskop zusammen mit einer aufgesetzten Kamera verwendet. Etwaige Verzerrungen der einzelnen Ebenen infolge der Abbildungstechnik (mögliche Asymmetrien durch Ebenenkonvergenz) werden gegebenenfalls durch den Rechner vor der Erstellung eines Oberflächenprofils korrigiert. Die Daten der gewonnenen Oberflächenprofile sind auf einem Rechner leicht darstellbar.

Insbesondere können mikroskopische Oberflächen mittels konventioneller Lichtmikroskopie rekonstruiert werden. Bei der Mikroskopie können Objekte mit einer geometrischen Oberflächenstrukturierung nicht gleichzeitig vollständig scharf abgebildet werden. Deshalb werden mit einer geeigneten Konstruktion verschiedene Fokusebenen des Objektes gezielt und reversibel angefahren und Bilder - bevorzugt mit einer digitalen Bildaufnahme - in den verschiedenen Fokusebenen aufgezeichnet. Mithilfe des Rechners wird daraus automatisch eine "Höhenkarte" der mikroskopischen Objektoberfläche errechnet.

Es kann bereits ein einfaches Mikroskop mit einem höhenverstellbaren Tisch und mit einer CCD Kamera genügen. Es werden Bilder von dem Objekt bei unterschiedlichen Tischhöhen, also in verschiedenen Fokusebenen, aufgenommen. Aufgrund der Schärfentiefe des Mikroskops enthält jedes der Bilder scharfe und unscharfe Bereiche. Aus der aufgenommenen Serie von Bildern werden nach bestimmten Kriterien z.B. die jeweils scharfen Bereiche in den einzelnen Ebenen herausgefunden und als Ebenennummer den entsprechenden Koordinatenpunkten (x, y) zugeordnet. Die Zuordnung von Ebenennummern und Koordinatenpunkten (x, y) wird in einem Speicher abgespeichert und stellt ein Maskenbild dar. Bei einer Bildverarbeitung des Maskenbildes können die im Maskenbild abgespeicherten Ebenennummern als Grauwerte betrachtet werden.

Das Maskenbild stellt somit ein zweidimensionales Bild dar, das nur wesentliche Daten enthält. Ein großer Vorteil des Maskenbildes besteht also darin, dass die Datenmenge stark reduziert ist.

Einerseits können aufgrund der reduzierte Datenmenge anstelle der Bearbeitung eines dreidimensionalen Bildes normale, herkömmliche 2D-Bildverarbeitungsalgorithmen auf das Maskenbild angewendet werden. Auf dem Markt sind sehr viele 2D-Bildverarbeitungsalgorithmen für verschiedene Bearbeitungszwecke erhältlich und können gegebenenfalls für das Maskenbild problemlos eingesetzt werden.

Andererseits bedeutet die reduzierte Datenmenge, dass aus dem Maskenbild die 3D-Information schnell und einfach abrufbar ist. Aus dem Maskenbild kann jederzeit die Ebenennummer bei einer vorgegebenen Koordinate (x, y) abgerufen und dadurch ein relativer Höhenwert angezeigt werden. Durch Multiplikation der Ebenennummer mit den Abständen zwischen den Ebenen kann ein absoluter Höhenwert in einer Maßeinheit, z.B. in µm angegeben werden. Außerdem können die relativen oder absoluten Höhenwerte zu einem vollständig scharfen dreidimensionalen Bild der Objektoberfläche zusammengesetzt werden. Ein derart rekonstruiertes dreidimensionale Bild weist somit eine stark verbesserte Bildqualität im Vergleich zu konventionellen mikroskopischen Aufnahmen auf. Außerdem kann das Oberflächenprofil des Objektes aufgrund der stark reduzierten Datenmenge schnell aus dem Maskenbild ausgelesen und somit in Echtzeit auf einem Monitor dargestellt werden. Das Verfahren ist auch robust, d.h. es ist sicher und kaum fehleranfällig.

Weiterhin kann das Verfahren für die Berechnung des Maskenbildes wesentlich beschleunigt werden, indem nicht jedes Bildpixel in x- und y-Richtung analysiert wird sondern nur jedes zweite oder vierte etc.. Im Detail kann dieses Prinzip durch Reduktion aller zunächst aufgenommenen Bildebenen auf eine kleinere Bildgröße (Thumbnails) realisiert werden. Auf diese verkleinerten Bilder wird nun oben beschriebenes Verfahren zur Maskenbilderzeugung angewandt. Anschließend wird das verkleinerte Maskenbild wieder auf Originalgröße vergrößert. Fehlende Subpixel werden bei der Vergrößerung durch geeignete Verfahren interpoliert. Das Verfahren gewinnt den Zeitvorteil dadurch, dass die benötigten Berechnungsschritte zur Maskenbilderstellung reduziert werden. Bereits eine Halbierung der Kantenlänge eines Bildes würde z.B. den Rechenaufwand zur Erstellung eines verkleinerten Maskenbildes um den Faktor 4 reduzieren. Der tatsächliche Nettogewinn durch dieses Verfahren hängt schlussendlich von dem Aufwand und dem verwendeten Verfahren der Subpixelinterpolation ab, welches bei einer Vergrößerung des verkleinerten Maskenbildes auf Originalgröße Verwendung findet. Mögliche Reduktionsfaktoren sind bildabhängig.

Zudem ist es vorteilhaft, dass für das erfindungsgemäße Verfahren jedes normale Lichtmikroskop eingesetzt werden kann, wodurch sich eine kostengünstige Alternative zu dem CLSM ergibt.

Die Erfindung wird nachfolgend anhand der in der Zeichnung dargestellten Ausführungsbeispiele näher erläutert. Die Zeichnung zeigt schematisch in:
- Fig.1: ein Objekt und Bildaufnahmen des Objekts in verschiedenen Objektebenen,
- Fig.2: die Entstehung eines Maskenbildes aus den Informationen in den Objektebenen,
- Fig.3: Pixel -Detailansicht der aufgenommenen Objektebenen,
- Fig.4: Lichtkegel zur Erklärung des Pseudokontrastes und
- Fig.5: ein rekonstruiertes Oberflächenprofil eines aufgenommenen Objektes.,

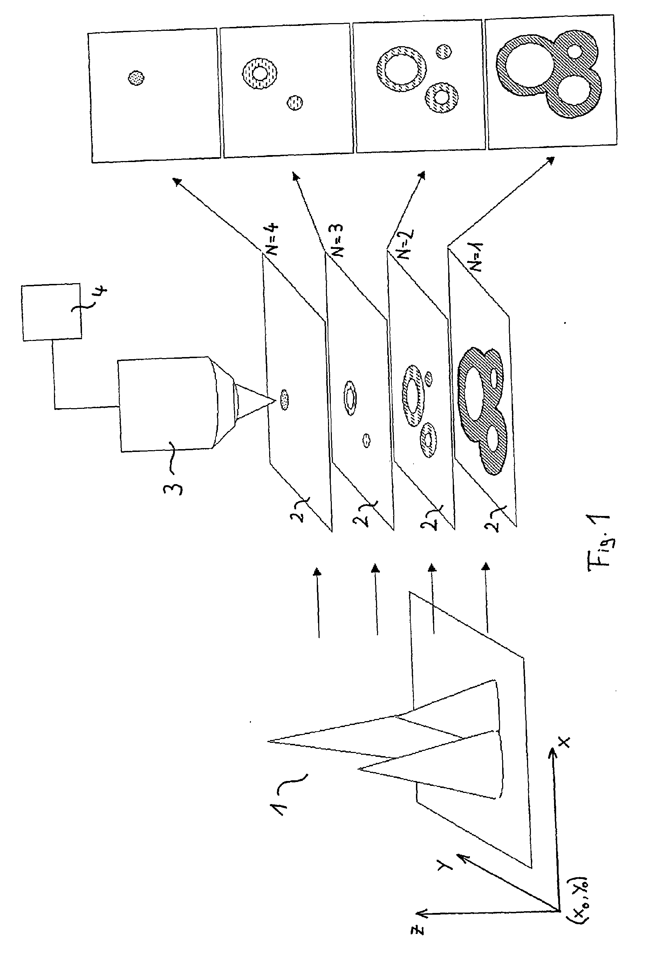

In einem ersten Ausführungsbeispiel gemäß Fig. 1 werden mit einer Bildaufnahmeeinrichtung 3, die z.B. aus einem Auflichtmikroskop und einer Kamera besteht, insgesamt n Bilder eines Objektes 1 durch n-maliges Verfahren des Mikroskoptisches in z-Richtung um äquidistante Abstände dz aufgenommen und digitalisiert in einem Rechner 4 gespeichert. Vorzugsweise liegen die Abstände dz in etwa in der Größenordnung der Schärfentiefe des Mikroskops. Die Position des Objektes 1 in der horizontalen Ebene bleibt dabei unverändert. Auf diese Weise entsteht eine Serie von n Bildern, die im weiteren Bildstapel genannt wird. Im übrigen kann anstelle des Verfahrens des Mikroskoptisches auch die Bildaufnahmeeinrichtung 3 oder Teile davon (z.B. Zoomlinsen) zur Scharfstellung auf verschiedene Objektebenen 2 verfahren werden. Die z-Verstellung des Mikroskoptisches kann bei entsprechend kleinen Verstellschritten auch durch einen Piezo-Antrieb erfolgen.

Als Objekt 1 sind im linken Teil der Fig.1 drei Kegel dargestellt. Die Fußbereiche der Kegel fließen teilweise ineinander, so dass in diesem Bereich die Oberflächenstruktur des Objektes 1 etwas komplizierter ist als die Oberfläche eines separaten Kegels.

Im mittleren und rechten Teil der Fig.1 sind beispielhaft vier Ebenen 2 mit den Ebenen-Nummern N=1 bis N=4 gezeigt, die verschiedene horizontale Querschnitte des Objektes 1 darstellen. Jede Ebene 2 enthält Bereiche, die von der Bildaufnahmevorrichtung 3 scharf abgebildet werden. Sie sind für jede Ebene unterschiedlich schraffiert dargestellt. Alle anderen umliegenden Bereiche werden unscharf abgebildet. Die Aufteilung in scharf und unscharf abgebildete Bereiche sind in jeder Ebene 2 anders und natürlich objektabhängig. Der Abstand dz der Ebenen 2 sollte nicht größer als die Schärfentiefe der Bildaufnahmevorrichtung 3 sein. Ist diese Regel erfüllt, so entsteht bei hinreichend vielen Ebenen 2 bei Überlagerung nur der bildscharfen Bereiche einer jeden Ebene 2 ein vollständig scharfes Bild.

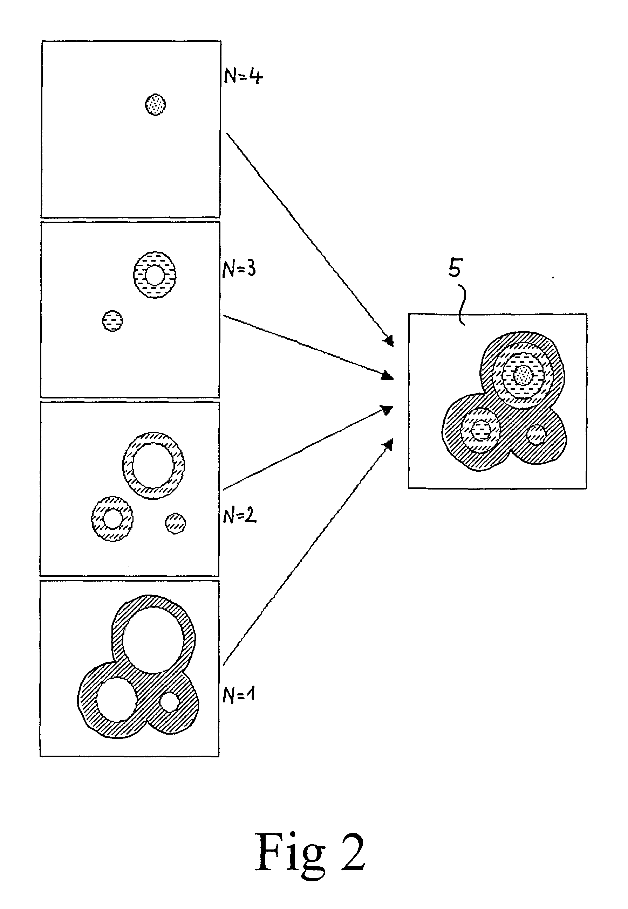

Diese Überlagerung zu einem zweidimensionalen, nur bildscharfe Bereiche enthaltenden Bild ist im rechten Teil der Fig. 2 dargestellt und wird als Maskenbild 5 bezeichnet. Die unterschiedlichen Schraffuren im Maskenbild 5 entsprechen den in Fig. 1 dargestellten Schraffuren für die verschiedenen Ebenen 2.

In dem hier vorgeschlagenen Verfahren wird also nicht direkt ein tiefenscharfes Bild des gesamten Objekts 1 berechnet, bei dem die einzelnen Pixel des Bildes die entsprechenden Grauwerte enthalten, sondern es wird zunächst ein Maskenbild 5 erstellt, das Ebenennummern N enthält und wie nachfolgend erläutert erstellt wird.

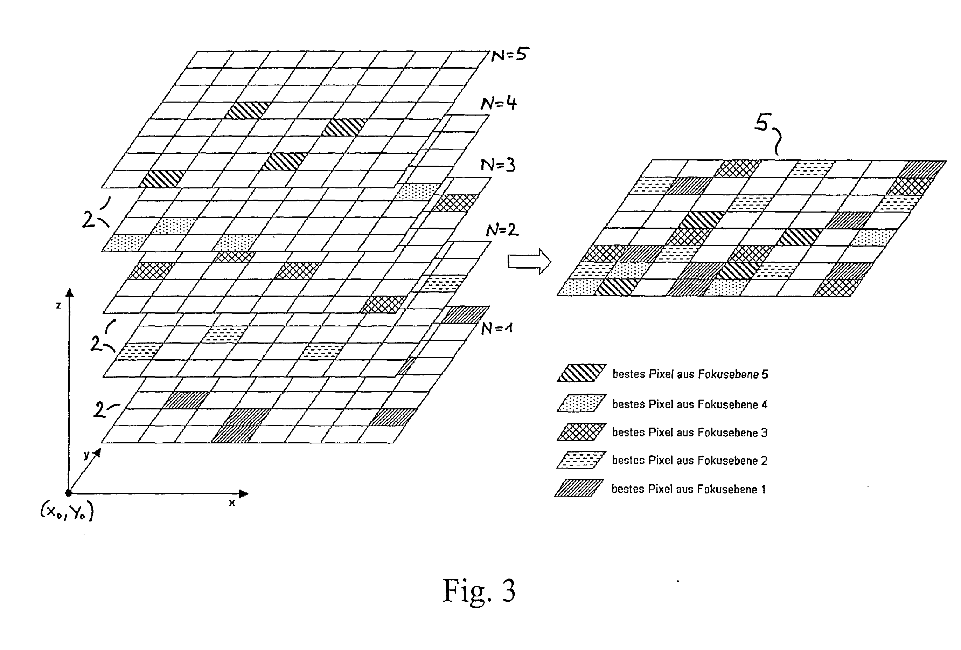

Fig. 3 zeigt eine Detaildarstellung der einzelnen Ebenen 2, wobei die einzelnen Kästchen in den Ebenen 2 die Pixel der aufgenommen Bilder im Bildstapel bedeuten. Diese Pixel enthalten Grauwerte als Bildinformation. Für jede x, y Position im Koordinatensystem x, y, z wird in dem Bildstapel in z-Richtung jenes Pixel gesucht, welches die zugehörige Objektstruktur am besten abbildet. Eine "beste Abbildung" kann nach verschiedenen Kriterien bestimmt werden. Ein häufig eingesetztes Kriterium ist beispielsweise der Kontrast oder die Schärfe des Bildes. Es kann also mit Hilfe einer Kontrastfunktion nach dem größten Kontrast in dem Bildstapel an der Koordinate (x, y) gesucht werden. Dasjenige Pixel, das die entsprechenden Bedingungen erfüllt, wird als "bestes Pixel" bezeichnet und bestimmt die Ebenennummer N im Bildstapel an der Koordinate (x, y). Diese Nummer N der Ebene 2 wird der Koordinate (x, y) zugeordnet und im Maskenbild 5 abgespeichert.

Wird dieses Verfahren für jede Koordinate x, y durchgeführt, so wird ein vollständiges Maskenbild 5 generiert, und zwar derart, das die "Grauwerte" in diesem Maskenbild den Nummern der Bildebenen entsprechen, welche nach dem verwendeten Berechnungsverfahren das "beste Pixel" geliefert haben. In Fig. 3 sind die "besten Pixel" jeweils mit einer bestimmten Schraffur versehen, die der jeweilige Ebenennummer N entspricht. Somit liegt zu jeder Koordinate x, y die zugehörige Ebenennummer N im Maskenbild 5 vor. Das Maskenbild 5, , das im rechten Teil der Fig. 3 gezeigt ist, ist also durch die Funktion N (x, y) an den diskreten Werten (x, y) gegeben. Die sonst üblicherweise in einem Ergebnisbild abgespeicherten Grauwerte der Pixel sind beim erfindungsgemäßen Verfahren also durch die Ebenen-Nummern N ersetzt.

In dem derart entstandenen zweidimensionalen Maskenbild 5 kann natürlich an mehreren Koordinatenpunkten (x, y) dieselbe Ebenen-Nummer N eingetragen sein. D.h. an mehreren Koordinatenpunkten (x, y) in einer einzigen Ebene 2 ist das Berechnungskriterium für das "beste Pixel" erfüllt. Insgesamt enthält das Maskenbild 5 alle "besten Pixel" und somit die Höheninformation des Objektes 1.

Die gesamte Anzahl n der verwendeten Ebenen 2 und der erzeugten Bilder kann von nur wenigen Ebenen 2 bis zu einigen hundert Ebenen 2 betragen. Die Gesamtanzahl n der Ebenen 2 hängt von der Größe des Objektes 1 und von den Anforderungen an die Auflösung in z-Richtung und der Schärfentiefe der Optik der Bildaufnahmevorrichtung 3 ab und kann entsprechend gewählt oder auch automatisch eingestellt werden

Weiterhin kann jede Ebene 2 auch durch mehrere Bilder aufgenommen werden. So können in einer Ebene 2 z.B. mehrere Zehn oder auch mehrere Hundert von Einzelbildern aufgenommen werden. Diese Einzelbilder einer Ebene 2 werden zunächst zu einem Mosaikbild zusammengesetzt. Geschieht dies für jede Ebene 2, so wird ein Bildstapel aus Mosaikbildern erzeugt. Dieser Bildstapel kann dann wiederum nach der oben beschriebenen Methode bearbeitet und ein Maskenbild 5 ermittelt werden.

Zur Ermittlung des "besten Pixels" aus vorbestimmten Kriterien bei dem erfindungsgemäßen Verfahren gibt es eine Vielzahl von bekannten Kriterien und Verfahren. Sehr häufig werden Kontrastverfahren verwendet. Hierbei sind insbesondere lokal wirksame Kontrastverfahren oder Fokusfunktionen von Vorteil.

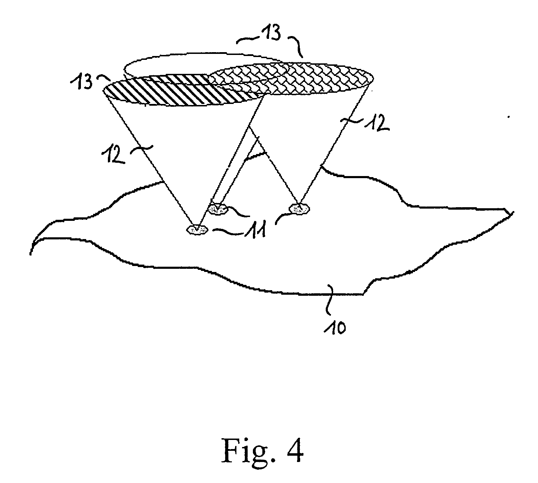

Hinsichtlich der Ermittlung des "besten Pixels" ist in Fig. 4 zu sehen, wie sich die Lichtemissionen von Oberflächenpunkten 11 mit zunehmendem Abstand von der Oberfläche 10 überlagern. Die "Lichtscheibchen" 13 werden mit zunehmendem Abstand von der Oberfläche 10 immer größer. Das wird von einem Betrachter als Unschärfe wahrgenommen. In dem Bildstapel muss es in jedem Bildbereich "beste Pixel" geben, also jene, die die Oberfläche 10 abbilden und die nicht durch Nachbarschaftsüberlagerungen entstehen. Um diese Bereiche zu finden wird für jeden Bildpunkt des Bildstapels der jeweilige lokale Kontrast bestimmt. Es ergibt sich für jede Koordinate (x, y) in z-Richtung eine Kontrastfunktion.

Es ist festzustellen, dass nicht immer ein eindeutiges Kontrastmaximum an den Stellen vorliegt, wo auch ein "bestes Pixel" vorliegt. Dieses Phänomen erklärt sich aus einem sogenannten Pseudokontrast, der außerhalb der Bildebene des "besten Pixels" liegt. Pseudokontrast wird z.B. durch die Überlagerung der Lichtbeiträge benachbarter Oberflächenpunkte 11 erzeugt (sich überlagernde Lichtkegel 12, siehe Fig. 4). Falls solche Uneindeutigkeiten auftreten, können sie durch ein empirisch entwickeltes Expertenprogramm eliminiert werden.

Für die Funktion des Verfahrens wird vorausgesetzt, dass die zu rekonstruierenden Objekte 1 genügend lokalen Kontrast / Textur aufweisen. Ohne jeglichen Kontrast sind Objektstrukturen nicht zu erkennen. Hier können gegebenenfalls aber andere Methoden wie z.B. Phasenkontrast weiterhelfen.

Bei sehr kontrastarmen Oberflächen (z.B. manchen Waferoberflächen) kann man sich dadurch behelfen, durch geeignete Aufbelichtungsverfahren ein zufälliges Texturmuster geeigneter Auflösung auf die zuvor kontrastlose Oberfläche aufzubelichten, dann zunächst ein Maskenbild zu berechnen und dieses Ergebnis abzuspeichern. In einem zweiten Durchgang werden alle Bilder des z - Stapels wiederholt gescannt, dieses mal aber ohne künstliche Texturaufbelichtung. Nun liegt ein z Bildstapel der relativ kontrastlosen Bilder und ein Maskenbild vor, welches durch eine künstliche Aufbelichtung einer Textur erstellt wurde. Durch Verrechnung der reinen Bilder mit dem Maskenbild nach obigem Verfahren kann man dann auch ein Oberflächenprofil von Oberflächen mit geringem Kontrast erhalten. Ein Multifokusbild inkl. eventuell auskorrigierter Asymmetrien der einzelnen Bildebenen durch Ebenenkonvergenz ist ebenso möglich.

Eine weitere wesentliche Verbesserung besteht in der Entfaltung (Deconvolution) eines jeden Ebenenbildes oder der Gesamtheit der Ebenenbilder mit dem individuellen Apparateprofil (Abbildungssystem) bevor der beschriebene Berechnungsprozess beginnt. Jede Ebene gewinnt dadurch deutlich an Schärfe. Die Menge der Fehler durch Pseudokontrastanteile werden reduziert.

Das Maskenbild 5 enthält nach erfolgter Berechnung und Zuordnung der "besten Pixel", also der Transformation der drei-dimensionalen Strukturen des Objektes 1 auf das zwei-dimensionale Maskenbild 5, alle 3D Informationen. Der Vorteil der Maskenbildgenerierung liegt darin, dass die 3D Information quasi als kodiertes Grauwertbild in zwei Dimensionen vorliegt. Die x, y Position innerhalb des Maskenbildes 5 kodiert die horizontale Ebene und die "Grauwerte" N die vertikale Richtung z. Somit können 2D-Standard-Bildanalysetechniken z.B. zum Verbessern und Glätten der drei-dimensionalen Strukturen des Objektes 1_herangezogen werden.

Da in dem Maskenbild 5 die Höheninformationen als "Grauwerte" codiert vorliegen (der "Grauwert" gibt hier die Nummer N der Ebene im Objekt an, in der das "beste Pixel" liegt)_kann das Maskenbild 5 jedem bekannten Bildverarbeitungsprozess unterzogen werden. Es kann geglättet werden, es können Kanten hervorgehoben oder Höhen-Mittelwerte erzeugt werden. Rauschen kann z.B. per Medianfilterung entfernt werden. Es können also viele nützliche 2D-Bildverarbeitungsalgorithmen verwendet werden, die bereits entwickelt und gut verstanden sind. Somit sind keine mit einem hohen Rechenaufwand und riesigen Datenmengen verbundenen drei-dimensionalen Bildbearbeitungstechniken (wie z.B. Oberflächen-Fit) notwendig, die zudem auch eine entsprechend lange Berechnungszeit benötigen.

Zur Rekonstruktion und Darstellung der im Maskenbild 5 befindlichen HöhenInformation des Objektes 1 kann das Maskenbild 5 auf verschieden Arten rekonstruiert und auf einem Bildschirm gezeigt werden. Im einfachsten Fall kann das Maskenbild 5 als Zahlenmatrix auf einem Bildschirm dargestellt werden. Die Ebenen-Nummern N geben die Höhen des Objektes 1 an der entsprechenden Stelle in der Zahlenmatrix an.

Eine bessere Veranschaulichung der Information im Maskenbild 5 wird durch eine grafische Aufbereitung erreicht. Bei der dreidimensionalen Darstellung des Maskenbildes 5 wird in der z-Richtung die Ebenen-Nummern N aufgetragen. Dadurch entsteht als Rekonstruktion ein anschauliches 3D-Profil des Objektes 1. Werden noch die Ebenen-Abstände dz berücksichtigt - bei konstanten Ebenen-Abständen dz brauchen nur die Ebenen-Nummern N mit dz multipliziert werden -, so entsteht eine mit Vermessungswerten versehene 3D-Darstellung des Oberflächenprofils des Objektes 1. Bei dieser Darstellung kann zu jeder Koordinate (x, y) der zugehörige Höhenwert aus der 3D-Darstellung abgelesen werden.

Natürlich kann auch mit einem Mauszeiger eine Koordinate (x, y) auf dem Bildschirm angefahren werden und automatisch der zugehörige Höhenwert als Zahlenwert mit Längenangabe auf dem Bildschirm z.B. direkt neben dem Mauszeiger angezeigt werden. Somit kann ein Benutzer an beliebigen Stellen die Höhe des Objektes angezeigt bekommen.

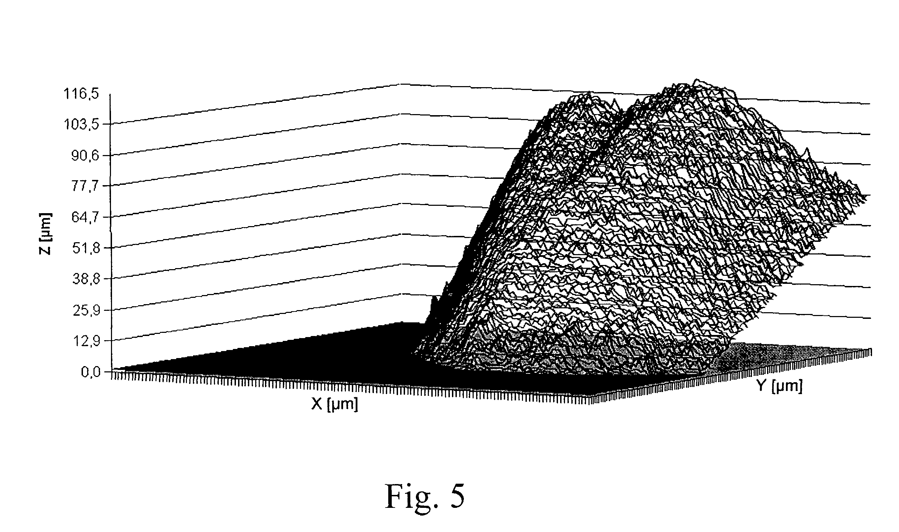

Fig. 5 zeigt eine in dieser Weise gewonnene 3-dimensionale Rekonstruktion eines Lötkontaktes auf einem Halbleiter-Schaltkreis (IC).

Um größere Strukturen und Oberflächenprofile zu vermessen, für die ein Mikroskop nicht geeignet ist, kann ein Makroskop anstelle des Mikroskops eingesetzt werden. Etwaige Verzerrungen der einzelnen Ebenen infolge der Abbildungstechnik (mögliche Asymmetrien durch Ebenenkonvergenz) werden gegebenenfalls durch den Rechner vor der Erstellung eines Oberflächenprofils Ebenenweise korrigiert. Bei einem Makroskop kann der Tisch, auf dem das Objekt befestigt ist, unveränderlich gehalten werden, wobei in diesem Fall die Fokussierung auf verschiedene Ebenen des Objektes durch Verstellen der Optik erfolgt. Durch Aufnahmen des Objektes in verschiedenen Ebenen kann mittels des erfindungsgemäßen Verfahrens das Oberflächenprofil des Objektes erhalten werden.

Die Bildaufnahmevorrichtung kann andererseits aber auch nur aus einer normalen Kamera bestehen, mit der in unterschiedlichen Entfernungen Abbildungen erzielt werden können. Da bei Aufnahmen von Objekten in größeren Entfernungen eine Verzeichnung gegenüber den Aufnahmen bei kürzeren Entfernungen auftritt, ist diese entfernungsabhängige Verzeichnung mit zu berücksichtigen und als entsprechende Korrektur bei den Koordinatenpunkten (x, y) mit einzubeziehen. Natürlich können nicht nur Objekte in senkrechter Richtung aufgenommen werden. Insbesondere bei der ausschließlichen Verwendung einer Kamera kann diese auch horizontal gehalten werden und somit Profile von dreidimensionalen Objekten an einer Wand aufgenommen werden. Dies entspricht ebenso einem Entfernungsprofil. Im allgemeinen können also auch die Entfernungen zu verschiedenen Objekten, z.B. in einer Landschaft ermittelt werden.

### Bezugszeichenliste

- 1: Objekt
- 2: Fokusebenen
- 3: Bildaufnahmevorrichtung
- 4: Rechner
- 5: Maskenbild
- 10: Oberfläche
- 11: Oberflächenpunkt
- 12: Lichtkegel
- 13: Lichtscheibchen

## Patentansprüche

1. Verfahren zur optischen Vermessung eines Oberflächenprofils eines Objektes (1) in einem dreidimensionalen Koordinatensystem (x, y, z) **gekennzeichnet durch** die folgenden Schritte:
- Aufnehmen einer Serie von n Bildern des Objektes (1) in verschiedenen Ebenen (2) in z-Richtung mittels einer Bildaufnahmevorrichtung (3), wobei jede Ebene (2) eine Vielzahl von Koordinatenpunkten (x, y) enthält,
- Zuordnen jedes der Bilder zu einer Ebene (2) mit definierter Ebenen-Nummer (N) im Objekt,
- Beziehen einer jeden Ebene (2) auf einen gemeinsamen Ursprung (x₀,y₀) im Koordinatensystem (x, y, z) und
- Erzeugen eines Maskenbildes (5) **durch** die folgende Prozedur für jeden Koordinatenpunkt (x, y):
- Vergleichen der Bildinhalte aller n Bilder an diesem Koordinatenpunkt (x, y) miteinander, um daraus nach vorbestimmten Kriterien eine Ebene (2) zu bestimmen und deren Ebenen-Nummer (N) diesem Koordinatenpunkt (x, y) zuzuordnen und im Maskenbild (5) abzuspeichern.

2. Verfahren nach Anspruch 1, **dadurch gekennzeichnet, dass** konstante Abstände zwischen den Ebenen (2) eingestellt werden.

3. Verfahren nach Anspruch 1 oder 2, **dadurch gekennzeichnet, dass** die Abstände zwischen den Ebenen (2) in der Größenordnung der Schärfentiefe der Bildaufnahmevorrichtung (3) liegen.

4. Verfahren nach einem der vorhergehenden Ansprüche, **dadurch gekennzeichnet, dass** ein 2D-Bildverarbeitungsprozess auf das Maskenbild (5) angewendet wird.

5. Verfahren nach einem der vorhergehenden Ansprüche, **dadurch gekennzeichnet, dass** ein dreidimensionales Bild aus dem Maskenbild (5) rekonstruiert wird.

6. Vorrichtung zur optischen Vermessung eines Oberflächenprofils eines Objektes (1) mit
- einer Bildaufnahmevorrichtung (3) zur Aufnahme einer Serie von n Bildern des Objektes (1) in verschiedenen Ebenen (2) in z-Richtung eines Koordinatensystems (x, y, z), wobei jedes der Bilder einer Ebene (2) mit definierter Ebenennummer (N) im Objekt (1) zugeordnet ist und jede Ebene (2) auf einen gemeinsamen Ursprung (x₀,y₀) bezogen ist und jede Ebene (2) eine Vielzahl von Koordinatenpunkten (x, y) enthält, und mit
- einem Rechner (4), der für jeden Koordinatenpunkt (x, y) die Bildinhalte aller n Bilder an diesem Koordinatenpunkt (x, y) miteinander vergleicht, um daraus nach vorbestimmten Kriterien eine Ebene (2) zu bestimmen und deren Ebenen-Nummer (N) diesem Koordinatenpunkt (x, y) zuzuordnen und als ein Maskenbild (5) abzuspeichern.

7. Vorrichtung nach Anspruch 6, **dadurch gekennzeichnet, dass** die Bildaufnahmevorrichtung (3) ein Mikroskop mit einer Kamera ist.

8. Vorrichtung nach Anspruch 7, **dadurch gekennzeichnet, dass** zur Aufnahme der Serie von n Bildern des Objektes (1) eine Verstellvorrichtung zum Verändern des Abstandes zwischen dem Objektiv des Mikroskops und dem Objekt (1) vorgesehen ist.

9. Vorrichtung nach Anspruch 7, **dadurch gekennzeichnet, dass** die Verstellvorrichtung die Höhenverstellung des Mikroskoptisches ist.

10. Vorrichtung nach Anspruch 5, **dadurch gekennzeichnet, dass** die Bildaufnahmevorrichtung (3) eine Kamera oder ein Makroskop mit einer Kamera ist.
